# EUROPÄISCHE PATENTANMELDUNG

(11) **EP 3 091 656 A1**
(43) Veröffentlichungstag der Anmeldung: **09.11.2016**
(21) Anmeldenummer: 15166749.0
(22) Anmeldetag: 07.05.2015
(51) Int. Cl.: H02S 40/34

(54) **ABWÄRMEKONZEPT ZUM BAU VON HOCHSTROM-SOLAR-ANSCHLUSSDOSEN**

(71) Anmelder: Multi-Holding AG, 4123 Allschwil (CH)
(72) Erfinder: Volz, Hubert, 45470 Mülheim (DE)
(74) Vertreter: Frischknecht, Harry Ralph

(57) **Zusammenfassung**

Eine elektrische Freilaufschaltung für ein Photovoltaikmodul, welche Freilaufschaltung einen die Freilauffunktion bereitstellenden Freilaufschalter (4, 5, 6) umfasst, dadurch gekennzeichnet, dass die besagte Freilaufschaltung einen Widerstand von maximal 4 Milliohm (mΩ) bei 25°C und maximal 7 Milliohm (mΩ) bei 125°C, aufweist.

## Beschreibung

### TECHNISCHES GEBIET

Die vorliegende Erfindung betrifft das Wärmemanagement einer Anschlussdose für ein Hochstrom-Solarmodul bzw. eine elektrische Freilaufschaltung für ein Photovoltaikmodul nach dem Oberbegriff von Anspruch 1.

### STAND DER TECHNIK

Die Ströme der Photovoltaik-Module steigen seit Jahren und werden weiterhin steigen. Für den sicheren Betrieb der Photovoltaik-Module sind Freilaufdioden bzw. Bypassdioden notwendig. Derartige Freilaufdioden werden in Anschlussdosen angeordnet und stehen mit dem Photovoltaik-Modul elektrisch in Verbindung. In den Anschlussdosen erzeugen die Freilaufdioden grosse Abwärme. Diese Abwärme ist zu beherrschen, wofür es typischerweise zwei Wege gibt: Einerseits kann die Kühlleistung der Dose erhöht werden. Andererseits kann die Verlustleistung der Dioden verringert werden.

Die Kühlleistung dieser Anschlussdosen lässt sich nicht beliebig steigern, da normative Randbedingungen die Kühlleistung konstruktiv beschränken.

Zur Abhilfe wurde in der Vergangenheit der Umstieg von Silizium-Dioden auf Schottky-Dioden vorgeschlagen, welche die Abwärme verringern. Beispielsweise lehrt die EP 1 970 965 den Einsatz von solchen Schottky-Dioden.

Mittlerweile sind durch die Produktion von sogenannten Bifacial-Photovoltaik-Modulen (beidseitig optisch aktive Solarmodule) die Photovoltaik-Modul-Ströme auf über 12 Ampere gestiegen, wodurch selbst die Abwärme von Schottky-Dioden nicht mehr beherrschbar wird.

Für die zukünftigen, insbesondere die bifazialen, Photovoltaik-Module werden Dosennennströme von mindestens 16 Ampere benötigt, die sich mit einer konventionellen Dose ohne Verguss nur noch schwierig erreichen lassen. Mit Vergussmassen könnte man die Dosenkühlung steigern, dann wären Wartungsarbeiten an der Dose jedoch nicht möglich und das komplette Solarmodul müsste bei einem Defekt entsorgt werden.

Zusammenfassend können Schottky-Dioden bei Photovoltaik-Modulen mit grossen Photovoltaik-Modul-Strömen nicht weiter eingesetzt werden.

Im Stand der Technik kann das Problem wie folgt gelöst werden: Für die Nennnstromsteigerung bei unvergossenen Anschlußdosen verbleibt nur die Reduzierung der Diodenverlustleistung. Der Ersatz für Schottky Dioden besteht aus einer oftmals integrierten Transistorschaltung, welche unter verschiedensten Bezeichnungen - wie Cool Bypass Switch, Smart Bypass Diode oder Ideale Bypassdiode - angeboten werden. Diese Ersatzschaltungen sind jedoch von Halbleiterherstellern für den Dosennennstrom konzipiert und decken die bei der Dosenzulassung unumgängliche Prüfung beim 1,25fachen Dosennennstrom nicht ab. Hierbei besteht die Gefahr, dass die Ersatzschaltungen bei der Typzulassungsprüfung so heiß werden, dass sie sich selbst auslöten oder durch die selbst verursachte Hitze zerstört werden. Diese zur Zeit auf dem Markt befindlichen Ersatzschaltungen sind aufgrund der Prüfsituation von Anschlussdosen für Nennströme um 12A, jedoch keineswegs für 16A oder mehr geeignet.

Die technische Lösung für Hochstrom-Dosen beruht daher in einer Kombination von gegenüber dem Stand der Technik hinsichtlich Photovoltaik-Anwendungen verbesserten elektronischen Ersatzschaltungen für die Schottky Dioden und gleichzeitig einer wesentlich verbesserten Wärmeabfuhr durch die Dosenkonstruktion.

### DARSTELLUNG DER ERFINDUNG

Ausgehend von diesem Stand der Technik liegt der Erfindung die Aufgabe zugrunde, eine elektrische Schaltung mit Freilaufdiodenfunktion anzugeben, welche einen sicheren Betrieb bei hohen Dosennennströmen, insbesondere im Bereich von 12 Ampere bis 16 Ampere und darüber, erlaubt.

Diese Aufgabe wird durch die elektrische Schaltung nach dem Gegenstand von Anspruch 1 gelöst. Demgemäss umfasst die Freilaufschaltung einen die Freilauffunktion bereitstellenden Freilaufschalter, wobei die besagte Freilaufschaltung einen Widerstand von maximal 4 Milliohm (mΩ) bei 25°C und maximal 7 Milliohm bei 125°C aufweist.

Durch den Einsatz der Freilaufschaltung, die einen Widerstand von weniger als 4 Milliohm bei 25°C aufweist, kann erreicht werden, dass der sichere Betrieb dieser Schaltung mit einem thermischen Widerstand der Dose von 0 K/W bis zu 7 K/W bei einem Dosennennstrom von grösser als 16 Ampere möglich ist.

Typischerweise liegt der thermische Widerstand einer konventionellen Solaranschlussdose bei 13 K/W. Folglich wird bevorzugt eine Dose mit verbesserter Kühlleistung eingesetzt, so dass die volle Leistung der Freilaufschaltung erreicht wird.

Die technische Lösung für die Erhöhung der Dosennennströme beruht vorzugsweise in der Verwendung von hinsichtlich Photovoltaik-Anwendungen verbesserten elektronischen Ersatzschaltungen für die Schottky-Dioden. Eine solche kann durch die erfindungsgemässe Freilaufschaltung erreicht werden und zeichnet sich vorzugsweise durch folgende physikalische Eigenschaften aus:
Interner Kontaktwiderstand:

| | |
|---|---|
| R_{DSon} bei 25°C | 0 bis 4mΩ |
| R_{DSon} bei 125°C | 0 bis 7mΩ |
| Zulässiger Maximalstrom | mind. 16A, bevorzugt 25A und mehr |
| Maximale Sperrschichttemperatur | mind. 120°C |

Vorzugsweise weist die elektrische Schaltung einen Maximalstrom von grösser als 12 Ampere, insbesondere von grösser als 16 Ampere, auf.

Vorzugsweise liegt die Sperrschichttemperatur (Tj,max) des Freilaufschalters im Bereich von 125°C bis 150°C. Alternativerweise liegt die Sperrschichttemperatur (Tj,max) des Freilaufschalters mindestens 150°C oder darüber. In einer weiteren Alternative ist die Sperrschichttemperatur (Tj,max) des Freilaufschalters mindestens 175°C oder darüber.

Vorzugsweise beträgt der Spannungsabfall des Freilaufschalters in Durchlassrichtung, wenn elektrischer Strom von 16 Ampere durchgeleitet wird, 64 Millivolt oder weniger bei einer Übergangstemperatur von 25°C, 112 Millivolt oder weniger bei einer Übergangstemperatur von 125°C, und 144 Millivolt oder weniger bei einer Übergangstemperatur von 150°C.

Vorzugsweise beträgt der Spannungsabfall des Freilaufschalters in Durchlassrichtung, wenn elektrischer Strom von 20 Ampere durchgeleitet wird, 80 Millivolt oder weniger bei einer Übergangstemperatur von 25°C, 140 Millivolt oder weniger bei einer Übergangstemperatur von 125°C, und 180 Millivolt oder weniger bei einer Übergangstemperatur von 150°C.

Vorzugsweise steht der Freilaufschalter mit einem Kühlelement in thermischen Kontakt. Hierdurch kann die Abwärme verbessert abgeleitet werden.

Vorzugsweise ist der Freilaufschalter ein Cool Bypass Switch.

Besonders bevorzugt umfasst der Freilaufschalter ein SMD-Gehäuse oder ein nicht isoliertes Gehäuse.

Vorzugsweise ist der Freilaufschalter vom Typ zweipoliger elektronischer Schalter mit integrierter Spannungsversorgung und interner oder externer Kontrolleinheit, wobei die maximale Sperrschichttemperatur bei 125°C liegt, wobei die maximale Sperrschichttemperatur bei 150°C liegt, oder wobei die maximale Sperrschichttemperatur bei 175°C liegt.

Besonders bevorzugt kann ein Baustein des Typs SM74611 mit einer maximalen Sperrschichttemperatur von 125°C eingesetzt werden.

Der Freilaufschalter kann auch ein elektronischer Schalter oder ein elektromechanischer Schalter oder ein mechanischer Schalter oder ein temperaturgesteuerter mechanischer Schalter oder ein temperaturgesteuerter elektronischer Schalter sein.

Eine Anschlussdose für ein Photovoltaikmodul umfasst eine elektrische Freilaufschaltung nach obiger Beschreibung.

Vorzugsweise ist der Freilaufschalter auf einem Trägerelement montiert, welches in einer Aufnahme in der Anschlussdose platzierbar ist, wobei der Freilaufschalter vorzugweise über Steckkontakte mit der elektrischen Schaltung verbindbar ist.

Mit der erfindungsgemässen Freilaufschaltung wird die Abwärme derart verringert, dass die Kühlleistung der Anschlussdose nicht um ein Vielfaches erhöht werden muss. Die Freilaufschaltung hat, wie oben bereits erwähnt, maximale Betriebsdaten, wodurch man insbesondere für Bifazial-Module ausreichende Dosennennströme mit einem vertretbaren Kühlaufwand für die Anschlussdose erreichen kann.

Ein Photovoltaikmodul umfasst eine Anschlussdose nach obiger Beschreibung.

Besonders bevorzugt ist das Photovoltaikmodul ein bifaziales Photovoltaikmodul.

Vorzugsweise weist die Anschlussdose einen thermischen Widerstand von 7 K/W und darunter auf.

Hierbei wird vorzugsweise die Geometrie der Anschlussdose derart verändert, dass die Konvektionsströmungen, welche über dem zu kühlenden Freilaufschalter entstehen, nicht aufeinander zu fliessen, sondern im Wesentlichen in die gleiche Richtung strömen.

Die besonders bevorzugte Ausführungsform ist die Kombination der hochwertigen Bypasselemente mit der oben beschriebenen Dose mit vierfacher Kühlleistung pro Flächeneinheit und da sie halb so viel Fläche wie eine Standarddose hat, eine doppelte Kühlleistung bezogen auf die Dose. Besonders bevorzugt werden in der Anschlussdose entsprechende Kühlelemente vorgesehen.

Massgeblich für die Kühlleistung einer Solaranschlussdose ist der Wärmestrom, der durch freie Konvektion abgeführt werden kann. Dosen nach dem Stand der Technik haben die Geometrie einer dicken, ebenen Platte. Diese können die Wärme nur schlecht an die Umgebung abgeben, weil in der Plattenmitte zwei Konvektionsströmungen aufeinanderprallen und so eine Zone mit verminderter Wärmeabfuhr entsteht. Vorzugsweise weist die Anschlussdose, in welche die Freilaufschaltung gemäss obiger Beschreibung eingebaut ist, eine verbesserte Dosengeometrie auf, welche die Konvektionsströmung begünstigt. Insbesondere ist die Dosengeometrie der Konvektionsströmung angepasst. Besonders bevorzugt wird zudem die Lage der Kühlbleche an die Konvektionsströmung angepasst. Zudem oder alternativ kann durch eine relative Platzierung der Dose zum Photovoltaikmodul, insbesondere im Randbereich, die Kühlleistung verbessert werden.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: ein Schaltbild einer Ausführungsform der erfindungsgemässen Freilaufschaltung; und
- Fig. 2: eine Ansicht einer Anschlussdose mit einer erfindungsgemässen Freilaufschaltung.

### BESCHREIBUNG BEVORZUGTER AUSFÜHRUNGSFORMEN

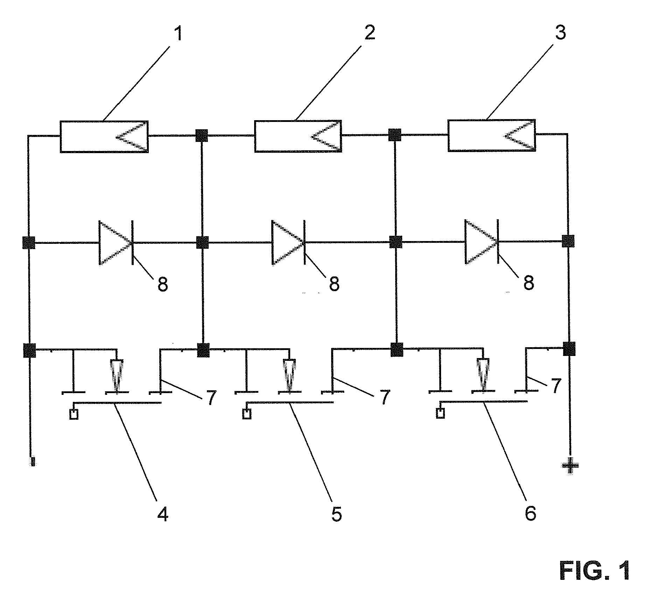

In der Figur 1 wird beispielhaft die Anwendung der unten beschriebenen technischen Lehre auf drei Solarzellen 1, 2, 3 bzw. Solarzellgruppen 1, 2, 3 gezeigt. Jeder Solarzelle 1, 2, 3 ist dabei je ein Freilaufschalter 4, 5, 6 zugeordnet. Mit dem jeweiligen Freilaufschalter 4, 5, 6 kann ein Kurzschluss über der jeweiligen Solarzelle 1, 2, 3 bereitgestellt werden.

In der Figur 1 ist der Freilaufschalter 4, 5, 6 als elektronische Schalter gezeigt. Derartige Freilaufschalter 4, 5, 6 können als Cool Bypass Switches bezeichnet werden. In der Figur 1 umfasst ein Cool Bypass Switch 4, 5, 6 einen MOSFET Transistor 7 mit einer parasitären Diode 8. Andere Arten von Freilaufschaltern, wie unten beschrieben sind ebenfalls denkbar.

Der Freilaufschalter 4, 5, 6 ist Teil einer elektrischen Freilaufschaltung. Die Freilaufschaltung weist einen Widerstand von maximal 4 Milliohm (mΩ) bei 25°C und maximal 7 Milliohm (mΩ) bei 125°C, auf. Die gesamte elektrische Freilaufschaltung wird dabei auf den entsprechenden Widerstand ausgelegt und es werden Komponenten eingesetzt, welche das Erreichen der Widerstandswerte ermöglicht.

Vorzugsweise weist die elektrische Freilaufschaltung einen Maximalstrom von grösser als 16 Ampere auf.

Vorzugsweise liegt die Sperrschichttemperatur (Tj,max) des Freilaufschalters im Bereich von 125°C bis 150°C liegt, oder bei mindestens 150°C oder darüber. Alternativerweise liegt die Sperrschichttemperatur des Freilaufschalters 4, 5, 6 bei mindestens 175°C oder darüber.

Vorzugsweise ist der Spannungsabfall des Freilaufschalters 4, 5, 6 in Durchlassrichtung, wenn elektrischer Strom von 16 Ampere durchgeleitet wird, maximal 64 Millivolt oder wenn die Sperrschichttemperatur 25°C beträgt, 112 Millivolt oder weniger wenn die Sperrschichttemperatur 125°C beträgt, und 144 Millivolt oder weniger wenn die Sperrschichttemperatur 150°C beträgt.

Vorzugsweise ist der Spannungsabfall des Freilaufschalters 4, 5, 6 in Durchlassrichtung, wenn elektrischer Strom von 20 Ampere durchgeleitet wird, 80 Millivolt oder weniger bei einer Sperrschichttemperatur von 25°C, 140 Millivolt oder weniger bei einer Sperrschichttemperatur von 125°C, und 180 Millivolt oder weniger bei einer Sperrschichttemperatur von 150°C.

Jeder der Freilaufschalter 4, 5, 6 steht mit einem Kühlelement in thermischen Kontakt. Das Kühlelement ist derart angeordnet, dass die Kühlung möglichst optimal ist.

Besonders bevorzugt ist der Freilaufschalter 4, 5, 6 vom Typ zweipoliger elektronischer Schalter mit integrierter Spannungsversorgung und interner oder externer Kontrolleinheit. Beispielsweise kann ein Baustein des Typs SM 74611 mit einer maximalen Sperrschichttemperatur von 125°C eingesetzt werden.

Alternativerweise kann der Freilaufschalter ein elektronischer Schalter oder ein elektromechanischer Schalter oder ein mechanischer Schalter oder ein temperaturgesteuerter mechanischer Schalter oder ein temperaturgesteuerter elektronischer Schalter sein.

Besonders bevorzugt ist der Freilaufschalter auf einem Trägerelement montiert, welches in einer Aufnahme in der Anschlussdose platzierbar ist, wobei der Freilaufschalter vorzugweise über Steckkontakt mit der elektrischen Schaltung verbindbar ist.

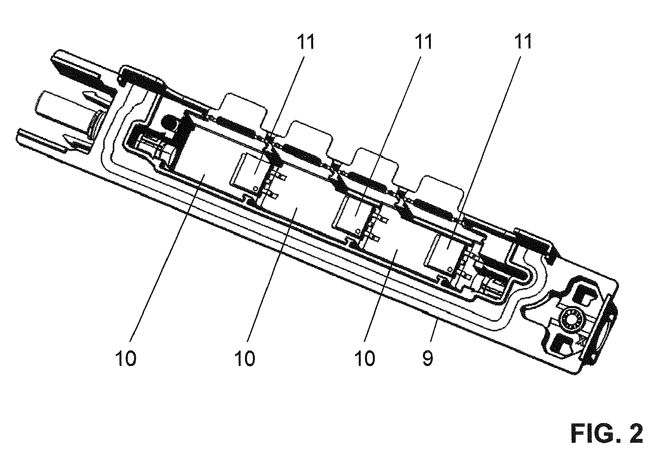

In der Figur 2 wird eine Anschlussdose 9 mit vergleichsweise hoher Kühlleistung gezeigt. Die erfindungsgemässe Freilaufschaltung 11 nach der Figur 1 steht in Kontakt mit Wärmeverteilblechen 10, welche die Abwärme der Freilaufschaltung 11 übernehmen und ableiten. Die in der Figur 2 gezeigte Dose hat gegenüber einer Standard-Anschlussdose eine verbesserte Kühlleistung pro Flächeneinheit, was es erlaubt, die Freilaufschaltung in einen bevorzugten Bereich zu betreiben.

Die Wärmeverteilbleche 10 sind im Innenraum der Anschlussdose 9 angeordnet.

### BEZUGSZEICHENLISTE

- 1: Solarzelle/Solarzellgruppe
- 2: Solarzelle/Solarzellgruppe
- 3: Solarzelle/Solarzellgruppe
- 4: Freilaufschalter
- 5: Freilaufschalter
- 6: Freilaufschalter
- 7: MOSFET Transistor
- 8: parasitäre Diode
- 9: Anschlussdose
- 10: Wärmeverteilbleche
- 11: Freilaufschaltung

## Patentansprüche

1. Elektrische Freilaufschaltung für ein Photovoltaikmodul, welche Freilaufschaltung einen die Freilauffunktion bereitstellenden Freilaufschalter (4, 5, 6) umfasst, **dadurch gekennzeichnet, dass** die besagte Freilaufschaltung einen Widerstand von maximal 4 Milliohm (mΩ) bei 25°C und maximal 7 Milliohm (mΩ) bei 125°C, aufweist.

2. Elektrische Freilaufschaltung nach Anspruch 1, **dadurch gekennzeichnet, dass** die elektrische Freilaufschaltung einen Maximalstrom von grösser als 12 Ampere, insbesondere grösser als 16 Ampere, aufweist.

3. Elektrische Freilaufschaltung nach Anspruch 1 oder 2, **dadurch gekennzeichnet, dass** die Sperrschichttemperatur (Tj,max) des Freilaufschalters im Bereich von 125°C bis 150°C liegt, oder dass die Sperrschichttemperatur (Tj,max) des Freilaufschalters mindestens 150°C oder darüber ist, oder dass die Sperrschichttemperatur (Tj,max) des Freilaufschalters mindestens 175°C oder darüber ist.

4. Elektrische Freilaufschaltung nach einem der vorhergehenden Ansprüche, **dadurch gekennzeichnet, dass** der Spannungsabfall des Freilaufschalters in Durchlassrichtung, wenn elektrischer Strom von 16 Ampere durchgeleitet wird, 64 Millivolt oder weniger bei einer Sperrschichttemperatur von 25°C beträgt, 112 Millivolt oder weniger bei einer Sperrschichttemperatur von 125°C beträgt, und 144 Millivolt oder weniger bei einer Sperrschichttemperatur von 150°C beträgt.

5. Elektrische Freilaufschaltung nach einem der vorhergehenden Ansprüche, **dadurch gekennzeichnet, dass** der Spannungsabfall des Freilaufschalters in Durchlassrichtung, wenn elektrischer Strom von 20 Ampere durchgeleitet wird, 80 Millivolt oder weniger bei einer Sperrschichttemperatur von 25°C beträgt, 140 Millivolt oder weniger bei einer Sperrschichttemperatur von 125°C beträgt, und 180 Millivolt oder weniger bei einer Sperrschichttemperatur von 150°C beträgt.

6. Elektrische Freilaufschaltung nach einem der vorhergehenden Ansprüche, **dadurch gekennzeichnet, dass** der Freilaufschalter mit einem Kühlelement in thermischen Kontakt ist.

7. Elektrische Freilaufschaltung nach einem der vorhergehenden Ansprüche, **dadurch gekennzeichnet, dass** der Freilaufschalter ein Cool Bypass Switch ist.

8. Elektrische Freilaufschaltung nach einem der vorhergehenden Ansprüche, **dadurch gekennzeichnet, dass** der Freilaufschalter ein SMD-Gehäuse oder ein nicht isoliertes Gehäuse umfasst.

9. Elektrische Freilaufschaltung nach einem der vorhergehenden Ansprüche, **dadurch gekennzeichnet, dass** der Freilaufschalter vom Typ zweipoliger elektronischer Schalter mit integrierter Spannungsversorgung und interner oder externer Kontrolleinheit, wobei die maximale Sperrschichttemperatur bei 125°C liegt, wobei die maximale Sperrschichttemperatur bei 150°C liegt, oder wobei die maximale Sperrschichttemperatur bei 175°C liegt. und/oder dass der Freilaufschalter vom Typ SM74611 mit einer maximalen Sperrschichttemperatur von 125°C ist.

10. Elektrische Freilaufschaltung nach einem der vorhergehenden Ansprüche, **dadurch gekennzeichnet, dass** der Freilaufschalter ein elektronischer Schalter oder ein elektromechanischer Schalter oder ein mechanischer Schalter oder ein temperaturgesteuerter mechanischer Schalter oder ein temperaturgesteuerte elektronischer Schalter ist.

11. Anschlussdose (9) für ein Photovoltaikmodul umfassend eine elektrische Freilaufschaltung nach einem der vorhergehenden Ansprüche.

12. Anschlussdose nach Anspruch 11, **dadurch gekennzeichnet, dass** der Freilaufschalter auf einem Trägerelement montiert ist, welches in einer Aufnahme in der Anschlussdose platzierbar ist, wobei der Freilaufschalter vorzugweise über Steckkontakt mit der elektrischen Schaltung verbindbar ist.

13. Photovoltaikmodul umfassend eine Anschlussdose nach einem der vorhergehenden Ansprüche 11 oder 12.

14. Photovoltaikmodul nach Anspruch 13, **dadurch gekennzeichnet, dass** das Photovoltaikmodul ein bifaziales Photovoltaikmodul ist.
